# EUROPEAN PATENT APPLICATION

(11) **EP 4 835 025 A1**
(43) Date of publication of application: **04.11.2026**
(21) Application number: 24912835.6
(22) Date of filing: 24.12.2024
(51) Int. Cl.: C09J 4/02, C08F 2/44, C09J 11/08, C09J 175/14

(54) **RADICAL POLYMERIZABLE ADHESIVE**

(30) Priority: 25.12.2023 JP 2023218684
(71) Applicant: Cemedine Co., Ltd., Tokyo 141-8620 (JP)
(72) Inventor: KAWASHIMA, Takuma, Tokyo 141-8620 (JP); MIDORIKAWA, Tomohiro, Tokyo 141-8620 (JP); SHIMADA, Ryota, Tokyo 141-8620 (JP); YANO, Shingo, Tokyo 141-8620 (JP); KAWAMURA, Naotaka, Tokyo 141-8620 (JP); HORI, Daisuke, Tokyo 141-8620 (JP)
(74) Representative: Hasegawa, Kan
(86) International application number: PCT/JP2024/045737
(87) International publication number: WO 2025/142949

(57) **Abstract**

An object is to provide a radically polymerizable adhesive excellent in hot tensile lap-shear adhesive strength and also excellent in tensile lap-shear adhesive strength after heat treatment. As a solution, provided is a radically polymerizable adhesive containing (A) a radically polymerizable compound, (B) an organic peroxide, (C) a phosphate ester compound having a radically polymerizable group, and (D) a non-radically polymerizable polymer having a molecular weight of 1,000 or more, in which the radically polymerizable adhesive has a hot tensile lap-shear adhesive strength retention rate R^{a} of 13% or more and a heat aging resistance-tensile lap-shear adhesive strength retention rate R^{b} of 50% or more,
in which the hot tensile lap-shear adhesive strength retention rate R^{a} is calculated by equation (i):
[Math. 1] ${R}^{a} \left(%\right) = \frac{B \left(N/{mm}^{2}\right)}{A \left(N/{mm}^{2}\right)} \times 100$ (i) where, in equation (i), A is a tensile lap-shear adhesive strength (N/mm²) when bonding is performed at 23°C, and B is a hot tensile lap-shear adhesive strength (N/mm²) at 150°C,
in which the heat-aging tensile lap-shear adhesive strength retention rate R^{b} is calculated by equation (ii):
[Math. 2] ${R}^{b} \left(%\right) = \frac{C \left(N/{mm}^{2}\right)}{A \left(N/{mm}^{2}\right)} \times 100$ (ii) where, in equation (ii), A is a tensile lap-shear adhesive strength (N/mm²) when bonding is performed at 23°C, and C is a tensile lap-shear adhesive strength (N/mm²) after heating at 200°C for 2 hours and then cooling to 23°C.

## Description

### Technical Field

The present invention relates to a radically polymerizable adhesive.

### Background Art

A radically polymerizable adhesive is an adhesive that contains, as a constituent component, a radically polymerizable compound, such as a radically polymerizable compound having a (meth)acryloyl group, and is polymerized and cured by a radical curing reaction, which is a type of chain reaction. An anaerobic adhesive, which is one type of radically polymerizable adhesive, is a one-component adhesive that is stable over a long period of time at room temperature (25°C ± 5°C) without curing under conditions in which the adhesive is in contact with oxygen, for example, in contact with air. When the anaerobic adhesive is applied to an adherend and contact with oxygen is blocked (contact with air is blocked), curing immediately starts, thereby enabling adhesion of the adherend.

Anaerobic adhesives are applied, by utilizing their unique properties, to bonding of metal sheets, prevention of loosening of screws and bolts, fixation of fitting portions for bearings and the like, sealing, and the like.

Examples of radically polymerizable adhesives are disclosed in Patent Literatures 1 to 3.

Patent Literature 1 describes applying an anaerobic adhesive to a metal bolt/nut to which a curing accelerator containing a chelate compound has been applied, thereby performing fixing of the bolt and nut, and the like.

Patent Literature 2 describes applying an anaerobic adhesive to a metal bolt/nut to which a pretreatment agent for accelerating curing of an anaerobic adhesive has been applied, thereby performing fixing of the bolt and nut, and the like.

Patent Literature 3 describes applying an anaerobic adhesive composition containing an acrylic acid ester monomer, an organic peroxide, and a phosphoric acid compound having a (meth)acryloyl group to an inner wall of a ring and/or a shaft, inserting the shaft into the ring, and fitting and fixing the shaft and the ring.

### Citation List

### Patent Literature

PTL 1: Japanese Unexamined Patent Application Publication No. 60-179407
PTL 2: Japanese Examined Patent Application Publication No. 49-021093
PTL 3: Japanese Unexamined Patent Application Publication No. 51-132234

### Summary of Invention

### Technical Problem

Articles and the like produced by bonding with an anaerobic adhesive, which is a type of radically polymerizable adhesive, are subjected to coating or the like to form final products. Usually, at the time of coating, a heat-drying step or a baking step is performed.

The anaerobic adhesives described in Patent Literatures 1 to 3 have excellent adhesion; however, in a heated environment, adhesive strength (hot adhesive strength) may decrease, and bonded portions may peel off. In addition, since the anaerobic adhesives described in Patent Literatures 1 to 3 do not have sufficient heat aging resistance, adhesive strength may decrease after a heat treatment (baking) step after coating, and bonded portions may peel off.

An object to be achieved by the present invention is to provide a radically polymerizable adhesive excellent in hot tensile lap-shear adhesive strength and tensile lap-shear adhesive strength after heat treatment.

### Solution to Problem

The present inventors conducted intensive studies in order to solve the above problems and have found that the above problems can be solved by a radically polymerizable adhesive having a specific composition. This finding has led to the completion of the present invention.

Specifically, the present invention is as follows.

### [Item 1]

A radically polymerizable adhesive contains (A) a radically polymerizable compound; (B) an organic peroxide; (C) a phosphate ester compound having a radically polymerizable group; and (D) a non-radically polymerizable polymer having a molecular weight of 1,000 or more,
in which the radically polymerizable adhesive has a hot tensile lap-shear adhesive strength retention rate R^{a} of 13% or more and a heat aging resistance-tensile lap-shear adhesive strength retention rate R^{b} of 50% or more,
in which the hot tensile lap-shear adhesive strength retention rate R^{a} is calculated by equation (i):
   [Math. 1] ${R}^{a} \left(%\right) = \frac{B \left(N/{mm}^{2}\right)}{A \left(N/{mm}^{2}\right)} \times 100$ (i) where, in equation (i), A is a tensile lap-shear adhesive strength (N/mm²) when bonding is performed at 23°C, and B is a hot tensile lap-shear adhesive strength (N/mm²) at 150°C,
in which the heat aging resistance-tensile lap-shear adhesive strength retention rate R^{b} is calculated by equation (ii):
   [Math. 2] ${R}^{b} \left(%\right) = \frac{C \left(N/{mm}^{2}\right)}{A \left(N/{mm}^{2}\right)} \times 100$ (ii) where, in equation (ii), A is a tensile lap-shear adhesive strength (N/mm²) when bonding is performed at 23°C, and C is a tensile lap-shear adhesive strength (N/mm²) after heating at 200°C for 2 hours and then cooling to 23°C.

### [Item 2]

In the radically polymerizable adhesive described in item 1, the radically polymerizable compound (A) contains:
(a1) a radically polymerizable compound having, in a molecule, a structure represented by formula (1): 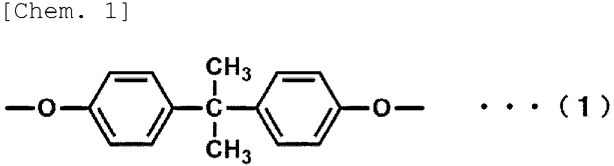 and/or
(a2) a urethane (meth)acrylate.

### [Item 3]

In the radically polymerizable adhesive described in item 1 or 2, the radically polymerizable adhesive is an anaerobic adhesive.

### [Item 4]

In the radically polymerizable adhesive described in item 3, the radically polymerizable adhesive is an anaerobic adhesive for metal.

### Advantageous Effects of Invention

According to the present invention, a radically polymerizable adhesive excellent in hot tensile lap-shear adhesive strength and tensile lap-shear adhesive strength after heat treatment is provided.

### Description of Embodiments

The radically polymerizable adhesive of the present invention is a radically polymerizable adhesive containing (A) a radically polymerizable compound, (B) an organic peroxide, (C) a phosphate ester compound having a radically polymerizable group, and (D) a non-radically polymerizable polymer having a molecular weight of 1,000 or more, in which the radically polymerizable adhesive has a hot tensile lap-shear adhesive strength retention rate R^{a} of 13% or more and a heat aging resistance-tensile lap-shear adhesive strength retention rate R^{b} of 50% or more,
in which the hot tensile lap-shear adhesive strength retention rate R^{a} is calculated by equation (i):
   [Math. 3] ${R}^{a} \left(%\right) = \frac{B \left(N/{mm}^{2}\right)}{A \left(N/{mm}^{2}\right)} \times 100$ (i) where, in equation (i), A is a tensile lap-shear adhesive strength (N/mm²) when bonding is performed at 23°C, and B is a hot tensile lap-shear adhesive strength (N/mm²) at 150°C,
in which the heat aging resistance-tensile lap-shear adhesive strength retention rate R^{b} is calculated by equation (ii):
   [Math. 4] ${R}^{b} \left(%\right) = \frac{C \left(N/{mm}^{2}\right)}{A \left(N/{mm}^{2}\right)} \times 100$ (ii) where, in equation (ii), A is a tensile lap-shear adhesive strength (N/mm²) when bonding is performed at 23°C, and C is a tensile lap-shear adhesive strength (N/mm²) after heating at 200°C for 2 hours and then cooling to 23°C.

In the radically polymerizable adhesive of the present invention, the radically polymerizable compound (A) may contain:
(a1) a radically polymerizable compound having, in a molecule, a structure represented by formula (1): 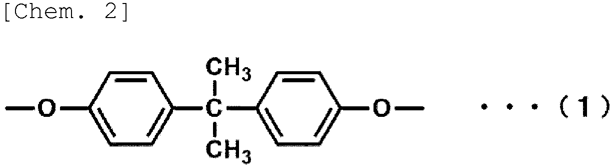 and/or
(a2) a urethane (meth)acrylate.

The radically polymerizable adhesive of the present invention may be an anaerobic adhesive, preferably an anaerobic adhesive for metal.

The radically polymerizable adhesive of the present invention will be described in detail below.

In the present specification, the term "(meth)acrylic" means "acrylic" and "methacrylic", the term "(meth)acrylate" means "acrylate" and "methacrylate", and the term "(meth)acryloyl" means "acryloyl" and "methacryloyl".

### [(A) Radically Polymerizable Compound]

The radically polymerizable compound (A) contained in the radically polymerizable adhesive of the present invention is a compound having a radically polymerizable functional group, particularly a radically polymerizable ethylenically unsaturated group, and is a compound other than the "(C) phosphate ester compound having a radically polymerizable group".

Examples of the radically polymerizable functional group include a (meth)acryloyl group, a vinyl group, an allyl group, a (meth)acrylamide group, a styryl group, an alkenyl group, an alkenylene group, a maleimide group, and the like, and among these, a (meth)acryloyl group is preferred.

The number of radically polymerizable groups contained in a molecule of the radically polymerizable compound (A) is not particularly limited. From the viewpoints of curability, adhesiveness, and the like, the number is, for example, 1 or more and 10 or less, preferably 1 or more and 8 or less, and more preferably 1 or more and 6 or less. In particular, in the present invention, one or more types of radically polymerizable compounds having one or two (meth)acryloyl groups are preferably used as the radically polymerizable compound (A). In addition, a mixture of one or more types of radically polymerizable compounds having one (meth)acryloyl group and one or more types of radically polymerizable compounds having two or more (meth)acryloyl groups may be used.

As the radically polymerizable compound (A), one or more types selected from the group consisting of radically polymerizable oligomers and radically polymerizable monomers can be used. In the present invention, examples of the radically polymerizable oligomer include compounds each having a weight-average molecular weight of 400 or more and one or more radically polymerizable groups. In the present invention, examples of the radically polymerizable monomer include compounds other than the radically polymerizable oligomer, the compounds each having, for example, a molecular weight of less than 400 and one or more radically polymerizable groups.

### <Radically Polymerizable Oligomer>

The radically polymerizable oligomer is not particularly limited as long as it is a compound having one or more radically polymerizable groups in a molecule, has a weight-average molecular weight of 400 or more, and is a radically polymerizable compound other than the phosphate ester compound (C) having a radically polymerizable group.

In the present invention, a (meth)acrylate oligomer having one or more (meth)acryloyl groups is preferably used as the radically polymerizable oligomer from the viewpoints of adhesive strength of the radically polymerizable adhesive to metal, curing rate, heat aging resistance, and the like.

The number of (meth)acryloyl groups contained in a molecule of the (meth)acrylate oligomer is not particularly limited. For example, the number can be 1 or more and 10 or less, preferably 1 or more and 8 or less, and more preferably 1 or more and 6 or less.

The upper limit of the weight-average molecular weight of the (meth)acrylate oligomer is not particularly limited. For example, the upper limit can be 100,000 or less, preferably 30,000 or less, and more preferably 20,000 or less.

Examples of the (meth)acrylate oligomer include one or more types selected from the group consisting of urethane (meth)acrylate, epoxy (meth)acrylate, bisphenol alkylene oxide adduct (meth)acrylate, ether (meth)acrylate, ester (meth)acrylate, isoprene-based (meth)acrylate, hydrogenated isoprene-based (meth)acrylate, a (meth)acrylic group-containing acrylic polymer, (meth)acrylic group-containing polyisobutylene, and the like. As the (meth)acrylate oligomer, either a commercially available product or a synthetic product may be used.

Examples of the urethane (meth)acrylate include those obtained by reacting at least a polyol component, a polyisocyanate component, and a compound having a functional group reactive with a hydroxy group or an isocyanate group and having a (meth)acrylate group.

As the polyol component, for example, those containing one or more types of polymer polyols selected from the group consisting of (hydrogenated) butadiene polyol, polycarbonate polyol, polyether polyol, polyester polyol, polyacrylate polyol (acrylic polyol), urethane polyol, and the like can be used.

As the polyisocyanate component, for example, one or more types selected from the group consisting of aliphatic polyisocyanates (such as hexamethylene diisocyanate), alicyclic polyisocyanates (such as dicyclohexylmethane diisocyanate and isobornyl diisocyanate), aromatic polyisocyanates (such as toluene diisocyanate and diphenylmethane diisocyanate), and araliphatic polyisocyanates (such as xylylene diisocyanate) can be used.

As the compound having a functional group reactive with a hydroxy group or an isocyanate group and a (meth)acrylate group, for example, one or more types selected from the group consisting of a (meth)acrylate having a group reactive with an isocyanate group (for example, one or more types selected from the group consisting of hydroxy group-containing (meth)acrylates and/or carboxyl group-containing (meth)acrylates described in <Radically Polymerizable Monomer>, and the like) or an isocyanate group and containing (meth)acrylate, and the like can be used.

Examples of the urethane (meth)acrylate include one or more types selected from the group consisting of urethane (meth)acrylate having a (hydrogenated) polybutadiene skeleton, urethane (meth)acrylate having a polycarbonate skeleton, urethane (meth)acrylate having a polyether skeleton, urethane (meth)acrylate having a polyester skeleton, urethane (meth)acrylate having a polyacrylate skeleton, urethane (meth)acrylate having a urethane skeleton, urethane (meth)acrylate having a castor oil skeleton, and the like.

The epoxy (meth)acrylate can be obtained, for example, by reacting an epoxy resin with a (meth)acrylate compound having a functional group reactive with an epoxy group.

Examples of the epoxy resin include one or more types selected from the group consisting of epoxy resins such as bisphenol-type epoxy resins (bisphenol A-type epoxy resin, bisphenol F-type epoxy resin, and the like), phenol novolactype epoxy resins, terminal glycidyl ethers of alkylene oxide adducts of bisphenol-type epoxy resins, and the like.

Examples of the (meth)acrylate compound having a functional group reactive with an epoxy group include one or more types selected from the group consisting of hydroxy group-containing (meth)acrylates and/or carboxyl group-containing (meth)acrylates described in <Radically Polymerizable Monomer>, and the like.

As the epoxy (meth)acrylate, a commercially available product can be used. Examples thereof include one or more types selected from the group consisting of EPICLON UE-8071-60BH, UE-8740, and UE-8410 (manufactured by DIC Corporation); KAYARAD R-115F (manufactured by Nippon Kayaku Co., Ltd.); Hitaloid 7851 (manufactured by Showa Denko K.K.); EPOXY ESTER 3000MK, 3000A, 3002A(N), and 3002M(N) (manufactured by Kyoeisha Chemical Co., Ltd.); LIGHT ACRYLATE BP-4EAL and BP-4PA (manufactured by Kyoeisha Chemical Co., Ltd.); NK ESTER BPE-80N, BPE-100, BPE-200, BPE-500, BPE-900, BPE-1300N, ABE-300, A-BPE-10, BPE-20, BPE-30, and A-BPE-4 (manufactured by Shin-Nakamura Chemical Co., Ltd.); VISCOAT #540 (manufactured by Osaka Organic Chemical Industry Ltd.); EBECRYL 600 and 3700 (manufactured by Daicel-Allnex Ltd.); BPE-4, BPE-10, BPE-20, BPEM-10, BPP-4, and HBPE-4 (manufactured by Dai-ichi Kogyo Seiyaku Co., Ltd.); and the like.

Examples of the bisphenol alkylene oxide adduct (meth)acrylate include one or more types of compounds represented by the following formula (A): 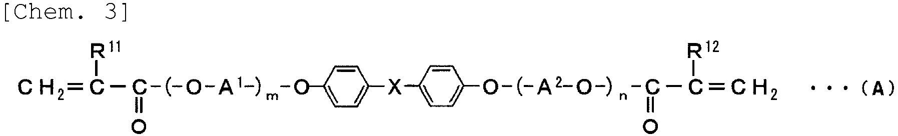 (where, in formula (A),
R¹¹ is a hydrogen atom or a methyl group.
R¹² is a hydrogen atom or a methyl group.
A¹ is an alkylene group having 1 to 6 carbon atoms, and when present in plural, may be different.
A² is an alkylene group having 1 to 6 carbon atoms, and when present in plural, may be different.
X is any one of a direct bond, -CH₂-, -C(CH₃)₂-, -CH(CH₃)-, - O-, -S-, -SO₂-, -CO-, -CF₂-, -C(CF₃)₂-, -C(Ph)₂-, and -CH(Ph)-(Ph is a phenyl group.).
m is 0 or an integer of 1 or more.
n is 0 or an integer of 1 or more.)
Among these, examples thereof include one or more types selected from the group consisting of (poly)oxyalkylenemodified bisphenol A di(meth)acrylates, for example, (poly)oxyethylene-modified bisphenol A di(meth)acrylates, (poly)oxypropylene-modified bisphenol A di(meth)acrylates, and the like. Specifically, among the compounds represented by formula (A) described above, a compound in which R¹¹ is a hydrogen atom or a methyl group, R¹² is a hydrogen atom or a methyl group, A¹ is an alkylene group having 2 to 6 carbon atoms (preferably 2 to 4 carbon atoms), A² is an alkylene group having 2 to 6 carbon atoms (preferably 2 to 4 carbon atoms), X is -C(CH₃)₂-, and m + n (that is, an ethoxy equivalent) is 1 to 40 (preferably 2 to 10) is preferred.

Examples of the ester (meth)acrylate oligomer include those obtained by adding, for example, a hydroxy group-containing (meth)acrylate and/or a carboxyl group-containing (meth)acrylate described in <Radically Polymerizable Monomer> to a carboxyl group and/or a hydroxy group of an ester-based oligomer obtained by a reaction between a polyol and a polyvalent carboxylic acid, and the like.

Examples of the ether (meth)acrylate oligomer include those obtained by adding, for example, a hydroxy group-containing (meth)acrylate and/or a carboxyl group-containing (meth)acrylate described in <Radically Polymerizable Monomer> to a hydroxy group of an aliphatic polyether polyol or to a hydroxy group of an aromatic polyether polyol using bisphenol or the like as a raw material, and the like.

Among these radically polymerizable oligomers, in particular, one or more types selected from the group consisting of urethane (meth)acrylate, epoxy (meth)acrylate, bisphenol alkylene oxide adduct (meth)acrylate, and ether (meth)acrylate are preferably used from the viewpoints of normal-state adhesiveness at the time of bonding metals to each other (normal-state tensile lap-shear adhesive strength), hot adhesiveness (hot tensile lap-shear adhesive strength), hot tensile lap-shear adhesive strength retention rate R^{a}, heat aging resistance (heat aging resistance-tensile lap-shear adhesive strength), heat aging resistance-tensile lap-shear adhesive strength retention rate R^{b}, and the like.

### <Radically Polymerizable Monomer>

The radically polymerizable monomer is not particularly limited as long as it is a compound having one or more radically polymerizable groups in a molecule, is a compound that is not a radically polymerizable oligomer or a radically polymerizable polymer, has a molecular weight of less than 400, and is a radically polymerizable compound other than the phosphate ester compound (C) having a radically polymerizable group.

In the present invention, a (meth)acrylate monomer having one or more (meth)acryloyl groups is preferably used as the radically polymerizable monomer from the viewpoints of adhesive strength of the radically polymerizable adhesive to metal, curing rate, heat aging resistance, and the like.

Among the (meth)acrylate monomers having one or more (meth)acryloyl groups, examples of the (meth)acrylate monomer having one (meth)acryloyl group include one or more types selected from the group consisting of aliphatic (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, 2-ethylhexyl (meth)acrylate, neopentyl (meth)acrylate, lauryl (meth)acrylate, and stearyl (meth)acrylate; alicyclic (meth)acrylates such as cyclohexyl (meth)acrylate, isobornyl (meth)acrylate, dicyclopentanyl (meth)acrylate, and adamantyl (meth)acrylate; aromatic ring-containing (meth)acrylates such as benzyl (meth)acrylate, phenyl (meth)acrylate, phenoxyethyl (meth)acrylate, phenoxydiethylene glycol (meth)acrylate, phenoxytetraethylene glycol (meth)acrylate, nonylphenoxyethyl (meth)acrylate, nonylphenoxytetraethylene glycol (meth)acrylate, and nonylphenyl polypropylene glycol (meth)acrylate; hydroxy group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 2-hydroxy-3-phenoxypropyl (meth)acrylate, glycerol (meth)acrylate, polyethylene glycol (meth)acrylate, polypropylene glycol (meth)acrylate, ethylene oxide-modified phthalic acid (meth)acrylate, ethylene oxide-modified succinic acid (meth)acrylate, caprolactone-modified 2-hydroxyethyl (meth)acrylate, and caprolactone-modified tetrahydrofurfuryl (meth)acrylate; carboxyl group-containing (meth)acrylates such as (meth)acrylic acid, 2-(meth)acryloyloxyethyl succinic acid, 2-(meth)acryloyloxyethyl phthalic acid, and 2-(meth)acryloyloxyethyl hexahydrophthalic acid; alkoxy group-containing (meth)acrylates such as methoxydiethylene glycol (meth)acrylate, ethoxydiethylene glycol (meth)acrylate, butoxyethyl (meth)acrylate, butoxytriethylene glycol (meth)acrylate, 2-ethylhexyl polyethylene glycol (meth)acrylate, and methoxydipropylene glycol (meth)acrylate; (meth)acryloyl group-containing amides such as acrylamide, hydroxyethyl acrylamide, dimethyl acrylamide, diethyl acrylamide, methacrylamide, N-methyl (meth)acrylamide, N-hydroxyethyl (meth)acrylamide, N-ethyl (meth)acrylamide, N-methylol (meth)acrylamide, N-methoxymethyl (meth)acrylamide, N-butoxymethyl (meth)acrylamide, N,N-dimethyl (meth)acrylamide, N,N-diethyl (meth)acrylamide, N,N-dipropyl (meth)acrylamide, N,N-diisopropyl (meth)acrylamide, N,N-dibutyl (meth)acrylamide, N,N-diisobutyl (meth)acrylamide, N,N-di-tert-butyl (meth)acrylamide, N,N-diheptyl (meth)acrylamide, N,N-dioctyl (meth)acrylamide, N,N-di-tert-octyl (meth)acrylamide, N,N-didodecyl (meth)acrylamide, N,N-dioctadecyl (meth)acrylamide, N,N-dimethylaminopropyl (meth)acrylamide, and N,N-dimethylaminoethyl (meth)acrylamide; amino group-containing (meth)acrylates such as N,N-dimethylaminoethyl (meth)acrylate, N,N-diethylaminoethyl (meth)acrylate, and N-t-butylaminoethyl (meth)acrylate; and heterocycle-containing (meth)acrylates such as glycidyl (meth)acrylate, (2-methyl-2-ethyl-1,3-dioxolan-4-yl)methyl (meth)acrylate, alkoxylated tetrahydrofurfuryl (meth)acrylate, tetrahydrofurfuryl (meth)acrylate, (3-ethyloxetan-3-yl)methyl (meth)acrylate, 4-hydroxybutyl (meth)acrylate glycidyl ether, (meth)acryloylmorpholine, N-(meth)acryloyloxyethyl hexahydrophthalimide, pentamethylpiperidyl (meth)acrylate, isocyanurate di(meth)acrylate, isocyanurate tri(meth)acrylate, triazine tri(meth)acrylate, N-(meth)acryloxysuccinimide, and N-(meth)acryloxyphthalimide; and the like.

Among the (meth)acrylates having one or more (meth)acryloyl groups, examples of the (meth)acrylate having two (meth)acryloyl groups include one or more types selected from the group consisting of ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, tripropylene glycol di(meth)acrylate, polypropylene di(meth)acrylate, ethoxylated polypropylene glycol di(meth)acrylate, ethoxylated propylene glycol di(meth)acrylate, 1,3-butanediol di(meth)acrylate, 1,4-butanediol di(meth)acrylate, 1,6-hexanediol di(meth)acrylate, 1,9-nonanediol di(meth)acrylate, glycerol di(meth)acrylate, trimethylolpropane di(meth)acrylate, glycidol di(meth)acrylate, pentaerythritol di(meth)acrylate, neopentyl glycol di(meth)acrylate, pentaerythritol di(meth)acrylate, ethylene oxide-modified neopentyl glycol di(meth)acrylate, propylene oxide-modified neopentyl glycol di(meth)acrylate, bisphenol A di(meth)acrylate, bisphenol A ethylene oxide-modified di(meth)acrylate, ethoxylated bisphenol A di(meth)acrylate, bisphenol A propylene oxide-modified di(meth)acrylate, propoxylated bisphenol A di(meth)acrylate, propoxylated ethoxylated bisphenol A di(meth)acrylate, hydroxypivalic acid ester neopentyl glycol diacrylate, caprolactone-modified hydroxypivalic acid ester neopentyl glycol diacrylate, neopentyl glycol-modified trimethylolpropane di(meth)acrylate, stearic acid-modified pentaerythritol di(meth)acrylate, dicyclopentenyl di(meth)acrylate, ethylene oxide-modified dicyclopentenyl di(meth)acrylate, di(meth)acryloyl isocyanurate, dimethyloltricyclodecane di(meth)acrylate, and the like.

Among the (meth)acrylates having one or more (meth)acryloyl groups, examples of the (meth)acrylate having three or more (meth)acryloyl groups include one or more types selected from the group consisting of tri(meth)acrylates having three (meth)acryloyl groups, such as glycerol tri(meth)acrylate, trimethylolpropane tri(meth)acrylate, ditrimethylolpropane tri(meth)acrylate, tetramethylolmethane triacrylate, propylene oxide-modified trimethylolpropane tri(meth)acrylate, ethylene oxide-modified trimethylolpropane tri(meth)acrylate, pentaerythritol tri(meth)acrylate, tris(acryloyloxyethyl) isocyanurate, ε-caprolactone-modified tris(acryloxyethyl) isocyanurate, and ethoxylated isocyanuric acid triacrylate; poly(meth)acrylates having four or more (meth)acryloyl groups, such as pentaerythritol tetra(meth)acrylate, dipentaerythritol tetra(meth)acrylate, ditrimethylolpropane tetra(meth)acrylate, ethoxylated pentaerythritol tetraacrylate, dipentaerythritol penta(meth)acrylate, dipentaerythritol hexa(meth)acrylate, tripentaerythritol hexa(meth)acrylate, and tetrapentaerythritol hexa(meth)acrylate; and the like.

Among these radically polymerizable monomers, one or more types selected from the group consisting of aliphatic (meth)acrylates such as methyl (meth)acrylate, ethyl (meth)acrylate, t-butyl (meth)acrylate, 2-ethylhexyl (meth)acrylate, neopentyl (meth)acrylate, lauryl (meth)acrylate, and stearyl (meth)acrylate; alicyclic (meth)acrylates such as cyclohexyl (meth)acrylate, isobornyl (meth)acrylate, and dicyclopentanyl (meth)acrylate; hydroxy group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol (meth)acrylate, and polypropylene glycol (meth)acrylate; carboxyl group-containing (meth)acrylates such as (meth)acrylic acid and 2-(meth)acryloyloxyethyl succinic acid; di(meth)acrylates having two (meth)acryloyl groups, such as ethylene glycol di(meth)acrylate, polyethylene glycol di(meth)acrylate, propylene glycol di(meth)acrylate, polypropylene di(meth)acrylate, 1,4-butanediol di(meth)acrylate, 1,6-hexanediol di(meth)acrylate, bisphenol A di(meth)acrylate, bisphenol A ethylene oxide-modified di(meth)acrylate, bisphenol A propylene oxide-modified di(meth)acrylate, propoxylated bisphenol A di(meth)acrylate, and dicyclopentenyl di(meth)acrylate; tri(meth)acrylates having three (meth)acryloyl groups, such as glycerol tri(meth)acrylate, trimethylolpropane tri(meth)acrylate, and ditrimethylolpropane tri(meth)acrylate; poly(meth)acrylates having four or more (meth)acryloyl groups, such as pentaerythritol tetra(meth)acrylate, dipentaerythritol tetra(meth)acrylate, dipentaerythritol penta(meth)acrylate, and dipentaerythritol hexa(meth)acrylate; and the like are preferred.

### <Preferred Embodiment of (A) Radically Polymerizable Compound>

In the present invention, from the viewpoints of hot adhesiveness (hot tensile lap-shear adhesive strength), hot tensile lap-shear adhesive strength retention rate R^{a}, heat aging resistance (heat aging resistance-tensile lap-shear adhesive strength), heat aging resistance-tensile lap-shear adhesive strength retention rate R^{b}, and the like, the radically polymerizable compound (A) preferably contains:
(a1) a radically polymerizable compound having, in a molecule, a structure represented by formula (1): 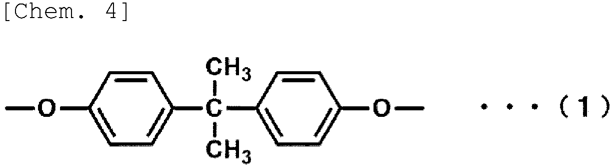 and/or
(a2) a urethane (meth)acrylate. As the radically polymerizable compound (a1) having, in a molecule, a structure represented by formula (1), one or more types can be used, and as the urethane (meth)acrylate (a2), one or more types can be used.

Examples of the radically polymerizable compound (a1) having, in a molecule, a structure represented by formula (1) described above include one or more types selected from the group consisting of:
(i) one or more types of epoxy (meth)acrylates that are reaction products of an epoxy resin having, in a molecule, a structure represented by formula (A) described above, such as a bisphenol A-type epoxy resin and a terminal glycidyl ether of an alkylene oxide adduct of a bisphenol A-type epoxy resin, with a hydroxy group-containing (meth)acrylate and/or a carboxyl group-containing (meth)acrylate (commercially available products include, for example, EPICLON UE-8071-60BH, UE-8740, and UE-8410 (manufactured by DIC Corporation), KAYARAD R-115F (manufactured by Nippon Kayaku Co., Ltd.), HITALOID 7851 (manufactured by Showa Denko K.K.), EPOXY ESTER 3000MK, 3000A, 3002A(N), and 3002M(N) (manufactured by Kyoeisha Chemical Co., Ltd.), LIGHT ACRYLATE BP-4EAL and BP-4PA (manufactured by Kyoeisha Chemical Co., Ltd.), NK ESTER BPE-80N, BPE-100, BPE-200, BPE-500, BPE-900, BPE-1300N, ABE-300, A-BPE-10, BPE-20, BPE-30, and A-BPE-4 (manufactured by Shin-Nakamura Chemical Co., Ltd.), VISCOAT #540 (manufactured by Osaka Organic Chemical Industry Ltd.), EBECRYL 600 and 3700 (manufactured by Daicel-Allnex Ltd.), BPE-4, BPE-10, BPE-20, BPEM-10, BPP-4, and HBPE-4 (manufactured by Dai-ichi Kogyo Seiyaku Co., Ltd.), VISCOAT VR-77 (manufactured by Showa Highpolymer Co., Ltd.), and the like);
(ii) bisphenol A di(meth)acrylate;
(iii) (poly)oxyalkylene-modified bisphenol A di(meth)acrylate (for example, bisphenol A ethylene oxide-modified di(meth)acrylate, ethoxylated bisphenol A di(meth)acrylate, bisphenol A propylene oxide-modified di(meth)acrylate, propoxylated bisphenol A di(meth)acrylate, propoxylated ethoxylated bisphenol A di(meth)acrylate, and the like);
and the like.

Examples of the urethane (meth)acrylate (a2) include one or more types selected from the group consisting of urethane (meth)acrylate having a polyether skeleton, urethane (meth)acrylate having a polyester skeleton, urethane (meth)acrylate having a polyacrylate skeleton, urethane (meth)acrylate having a urethane skeleton, urethane (meth)acrylate having a (hydrogenated) polybutadiene skeleton, urethane (meth)acrylate having a polycarbonate skeleton, urethane (meth)acrylate having a castor oil skeleton, and the like. The urethane (meth)acrylate (a2) is preferably one or more types selected from the group consisting of urethane (meth)acrylate having a polyether skeleton, urethane (meth)acrylate having a polyester skeleton, urethane (meth)acrylate having a polycarbonate skeleton, urethane (meth)acrylate having a polyacrylate skeleton, and urethane (meth)acrylate having a urethane skeleton, more preferably one or more types selected from the group consisting of urethane (meth)acrylate having a polyether skeleton, urethane (meth)acrylate having a polyester skeleton, and urethane (meth)acrylate having a polycarbonate skeleton, and still more preferably one or more types of urethane (meth)acrylate having a polyether skeleton.

Examples of the polyether skeleton in the urethane (meth)acrylate having a polyether skeleton include one or more types selected from the group consisting of a -(-CH₂CH₂O-)- skeleton, a -(-CH₂CH(CH₃)O-)- skeleton, a -(-CH(CH₃)CH₂O-)- skeleton, a -(-CH₂CH₂CH₂O-)- skeleton, a -(-CH₂CH₂CH₂CH₂O-)- skeleton, and the like.

Examples of commercially available products of the urethane (meth)acrylate (a2) include one or more types selected from the group consisting of SHIKOH UV-2750B, UV-7000B, UV-6640B, UV-7510B, UV-6630B, UV-7550B, UV-7610B, UV-7650B, UV-6300, UV-7620B, UV-7600B, UV-7630B, UV-7605B, UV-7640B, UV-1700B, UV-3310B, and the like (manufactured by Mitsubishi Chemical Corporation); ART RESIN UN-6200, UN-6207, UN-6303, UN-6304, UN-6305, UN-6306, UN-6307, UN-6060S, UN-6303PR, PMH101B, PMH-401B, MB-191, STQI-037PR, UN-333, UN-350, UN-352, UN-353, UN-7600, UN-7700, MBU-71, UN-5500, UN-5590, UN-9000PEP, UN-9200A, UN-2310, UN-2601, UN-2701, SMT-001, CWD-8E26, UN-3320HA, UN-3320HC, UN-3320HS, UN-904, UN-901T, UN-952, UN-954, UN-905, H-575, UN-906S, JHP-001, UN-1000PEP, UN-2500, UN-5200, UN-380G, UN-500, UN-9832, and the like (manufactured by Negami Chemical Industrial Co., Ltd.); NK OLIGO UA-4200, UA-160TM, UA-290TM, UA-7100, UA-W2A, UA-4400, UA-122P, U-200PA, UA-1100H, U-6LPA, UA-33H, U-10HA, U-10PA, U-15HA, and the like (manufactured by Shin-Nakamura Chemical Co., Ltd.); ARONIX M-1100, M-1200, and the like (manufactured by Toagosei Co., Ltd.); CN8899NS and the like (manufactured by Arkema); AH-600, AT-600, UA-306H, UF-8001G, and the like (manufactured by Kyoeisha Chemical Co., Ltd.); RUA-071, RUA-003VE, RUA-075, RUA-048, and the like (manufactured by Asia Industry Co., Ltd.); AU-2040 and the like (manufactured by Tokushiki Co., Ltd.); KUA-PC2I and the like (manufactured by KSM Co., Ltd.); and the like, but the commercially available products are not limited thereto.

In the present invention, from the viewpoint of adhesive strength to an adherend, particularly metal, the radically polymerizable compound (A) preferably contains one or more types of radically polymerizable compounds having one or more types of functional groups selected from the group consisting of a hydroxy group, a carboxyl group, and an amino group. The content of the radically polymerizable compound having a functional group in the radically polymerizable compound (A) is not particularly limited. For example, the content can be 30% by mass or more, preferably 35% by mass or more, and can be, for example, 60% by mass or less, preferably 55% by mass or less.

### <Content of (A) Radically Polymerizable Compound>

The content of the radically polymerizable compound (A) in the radically polymerizable adhesive is not particularly limited. The content can be in a range of, for example, 50% by mass or more, preferably 75% by mass or more, and, for example, 99% by mass or less, preferably 98% by mass or less, when the total amount of the radically polymerizable adhesive is taken as 100% by mass. In the case where the content of the radically polymerizable compound (A) is less than 50% by mass when the total amount of the radically polymerizable adhesive is taken as 100% by mass, normal-state adhesiveness (normal-state tensile lap-shear adhesive strength), hot adhesiveness (hot tensile adhesive strength), hot tensile lap-shear adhesive strength retention rate R^{a}, heat aging resistance (heat aging resistance-tensile adhesive strength), heat aging resistance-tensile lap-shear adhesive strength retention rate R^{b}, and the like of the radically polymerizable adhesive may be insufficient, and when the content is more than 99% by mass, normal-state adhesiveness, hot adhesiveness, heat aging resistance, curing rate, and the like of the radically polymerizable adhesive may be insufficient.

### [(B) Organic Peroxide]

The organic peroxide (B), which is a constituent component of the radically polymerizable adhesive of the present invention, is for imparting curability, for example, anaerobic curability and/or heat curability, to the radically polymerizable adhesive.

Examples of the organic peroxide (B) include one or more types selected from the group consisting of hydroperoxide-based compounds such as cumene hydroperoxide, t-butyl hydroperoxide, p-menthane hydroperoxide, methyl ethyl ketone peroxide, cyclohexane peroxide, dicumyl peroxide, and diisopropylbenzene hydroperoxide; and other organic peroxides such as ketone peroxide-based compounds, diallyl peroxide-based compounds, peroxyester-based compounds, and the like. Among these, hydroperoxide-based compounds are preferably used from the viewpoints of reactivity and storage stability of the radically polymerizable adhesive.

As the organic peroxide (B), from the viewpoint of excellent curability, particularly excellent anaerobic curability, an organic peroxide having a one-hour half-life temperature in a range of 80°C or higher, preferably 100°C or higher, and 300°C or lower, preferably 200°C or lower is preferred. The one-hour half-life temperature is a value measured by thermal decomposition under conditions of an organic peroxide concentration in benzene of 0.1 mol/L.

Examples of the organic peroxide having a one-hour half-life temperature in a range of 80°C or higher and 300°C or lower include hydroperoxides. Specific examples of the hydroperoxides include one or more types selected from the group consisting of p-menthane hydroperoxide, diisopropylbenzene hydroperoxide, 1,1,3,3-tetramethylbutyl hydroperoxide, cumene hydroperoxide, t-butyl hydroperoxide, and the like.

The content of the organic peroxide (B) in the radically polymerizable adhesive is not particularly limited. The content can be in a range of, for example, 0.05 parts by mass or more, preferably 0.1 parts by mass or more, and, for example, 10 parts by mass or less, preferably 5 parts by mass or less, with respect to 100 parts by mass of the radically polymerizable compound (A). When the blending amount of the organic peroxide (B) in the radically polymerizable adhesive is set to a range of 0.05 parts by mass or more and 10 parts by mass or less with respect to 100 parts by mass of the radically polymerizable compound (A), normal-state adhesiveness (normal-state tensile lap-shear adhesive strength), hot adhesiveness (hot tensile adhesive strength), hot tensile lap-shear adhesive strength retention rate R^{a}, heat aging resistance (heat aging resistance-tensile adhesive strength), heat aging resistance-tensile lap-shear adhesive strength retention rate R^{b}, and the like of the radically polymerizable adhesive can be further enhanced.

### [(C) Phosphate Ester Compound Having Radically Polymerizable Group]

The phosphate ester compound (C) having a radically polymerizable group, which is a constituent component of the radically polymerizable adhesive of the present invention, is one or more types of phosphate ester compounds having a radically polymerizable functional group and a group represented by the following formula (2) or (3):

-O-P(O)(OH)-O- ··· (2)

-O-P(O)(OH)₂ ··· (3).

An example of the radically polymerizable functional group is an ethylenically unsaturated bond. Examples of the ethylenically unsaturated bond include a (meth)acryloyl group, a vinyl group, an allyl group, a (meth)acrylamide group, a styryl group, an alkenyl group, an alkenylene group, a maleimide group, and the like, and among these, a (meth)acryloyl group is preferred. The number of radically polymerizable groups included in the phosphate ester compound (C) having a radically polymerizable group is not particularly limited. The number is 1 or more, and can be 3 or less, preferably 2 or less, from the viewpoints of reactivity, easy availability, and the like. When the phosphate ester compound (C) having a radically polymerizable group is used in combination with the radically polymerizable compound (A) and the organic peroxide (B), the combination has a marked effect of enabling a radically polymerizable adhesive exhibiting excellent adhesive strength (normal-state tensile lap-shear adhesive strength) with respect to various adherends, for example, metal sheets and plastics, particularly steel sheets, to be obtained.

The phosphate ester compound (C) having a radically polymerizable group is not particularly limited, and examples thereof include one or more types selected from the group consisting of 2-hydroxymethyl (meth)acrylate acid phosphate, 2-hydroxyethyl (meth)acrylate acid phosphate, 2-hydroxypropyl (meth)acrylate acid phosphate, bis(meth)acryloyloxy acid phosphate, bis(2-(meth)acryloyloxyethyl acid) phosphate, di-(2-(meth)acryloyloxy) hydrogen phosphate, ethylene oxide-modified phosphoric acid di(meth)acrylate, ethylene oxide-modified phosphoric acid tri(meth)acrylate, caprolactone-modified ethylene oxide-modified phosphoric acid di(meth)acrylate, dipentaerythtoril penta(meth)acryloyloxy dihydrogen phosphate, and the like.

The phosphate ester compound (C) having a radically polymerizable group may be synthesized, or a commercially available product may be used. Examples of the commercially available product include one or more types selected from the group consisting of LIGHT ESTER P-A, P-1M, and P-2M (all manufactured by Kyoeisha Chemical Co., Ltd.), KAYAMER PM-1 (manufactured by Nippon Kayaku Co., Ltd.), JPA-514 (manufactured by Johoku Chemical Co., Ltd.), and the like.

The content of the phosphate ester compound (C) having a radically polymerizable group in the radically polymerizable adhesive is not particularly limited. From the viewpoints of normal-state adhesiveness (normal-state tensile lap-shear adhesive strength), hot adhesiveness (hot tensile adhesive strength), hot tensile lap-shear adhesive strength retention rate R^{a}, heat aging resistance (heat aging resistance-tensile adhesive strength), heat aging resistance-tensile lap-shear adhesive strength retention rate R^{b}, and curing rate, with respect to an adherend, particularly metal, the content can be, with respect to 100 parts by mass of the radically polymerizable compound (A), for example, 0.05 parts by mass or more, preferably 0.06 parts by mass or more, more preferably 0.07 parts by mass or more, and, for example, less than 1.0 part by mass, preferably 0.8 parts by mass or less, more preferably 0.5 parts by mass or less. When the content of the phosphate ester compound (C) having a radically polymerizable group is 1.0 part by mass or more with respect to 100 parts by mass of the radically polymerizable compound (A), the curing rate may be insufficient, and when the content is less than 0.05 parts by mass, the radically polymerizable adhesive may be insufficient in normal-state adhesiveness (normal-state tensile lap-shear adhesive strength), hot adhesiveness (hot tensile adhesive strength), hot tensile lap-shear adhesive strength retention rate R^{a}, heat aging resistance (heat aging resistance-tensile adhesive strength), heat aging resistance-tensile lap-shear adhesive strength retention rate R^{b}, and the like.

### [(D) Non-Radically Polymerizable Polymer Having Molecular Weight of 1,000 or More]

The non-radically polymerizable polymer (D) having a molecular weight of 1,000 or more, which is a constituent component of the radically polymerizable adhesive of the present invention, is a polymer having a weight-average molecular weight of 1,000 or more and having no radically polymerizable group in a molecule. Here, an example of the radically polymerizable functional group is an ethylenically unsaturated bond. Examples of the ethylenically unsaturated bond include a (meth)acryloyl group, a vinyl group, an allyl group, a (meth)acrylamide group, a styryl group, an alkenyl group, an alkenylene group, a maleimide group, and the like.

The weight-average molecular weight of the non-radically polymerizable polymer (D) having a molecular weight of 1,000 or more is not particularly limited as long as it is 1,000 or more. The weight-average molecular weight is, for example, 3,000 or more, preferably 5,000 or more, and more preferably 10,000 or more, and is, for example, 500,000 or less, preferably 300,000 or less, and more preferably 200,000 or less. As the weight-average molecular weight, for example, a weight-average molecular weight in terms of polystyrene by GPC (gel permeation chromatography) can be used.

The glass transition temperature (Tg) of the non-radically polymerizable polymer (D) having a molecular weight of 1,000 or more is not particularly limited. The glass transition temperature is, for example, -50°C or higher, preferably -20°C or higher, and more preferably 10°C or higher, and is, for example, 200°C or lower, preferably 150°C or lower, and more preferably 120°C or lower. The glass transition temperature (Tg) can be determined from weight loss in a TG curve obtained by performing simultaneous thermogravimetry-differential thermal analysis [TG/DTA] at 600°C using a thermal analyzer under conditions including, for example, a nitrogen atmosphere, a temperature increase rate of 5°C/min, and a tensile mode (100 mN).

Examples of the non-radically polymerizable polymer (D) having a molecular weight of 1,000 or more include one or more types selected from the group consisting of (meth)acrylic resins, polyolefin resins, polystyrene resins, epoxy resins, rubbers and elastomers, polyvinyl alcohol resins, polyvinyl ester resins, diene resins, ABS resins, AS resins, styrene-butadiene resins, vinyl halide resins, cyclic polyolefin resins, polyester resins, polyether resins, phenoxy resins, urethane resins, polyamide resins, polycarbonate resins, polyimide resins, polysiloxane resins, phenolic resins, cellulose resins, rosin resins, modified resins of these resins, and the like. In the present invention, the non-radically polymerizable polymer (D) is preferably a thermoplastic resin, more preferably one or more types selected from the group consisting of (meth)acrylic resins, polyolefin resins, polystyrene resins, epoxy resins, rubbers and elastomers, polyvinyl alcohol resins, polyvinyl ester resins, ABS resins, AS resins, styrene-butadiene resins, vinyl halide resins, polyester resins, polyether resins, phenoxy resins, urethane resins, and polyamide resins, and still more preferably one or more types selected from the group consisting of (meth)acrylic resins, polyolefin resins, polystyrene resins, epoxy resins, rubbers and elastomers, polyester resins, polyether resins, phenoxy resins, urethane resins, and polyamide resins.

The content of the non-radically polymerizable polymer (D) having a molecular weight of 1,000 or more in the radically polymerizable adhesive is not particularly limited, as long as the content does not impair properties such as applicability and adhesive strength of the radically polymerizable adhesive. When the total amount of the radically polymerizable adhesive is taken as 100% by mass, the content can be, for example, 0.1% by mass or more, preferably 1% by mass or more, and more preferably 10% by mass or more, and can be in a range of, for example, 60% by mass or less, preferably 50% by mass or less. When the content of the non-radically polymerizable polymer (D) having a molecular weight of 1,000 or more is set to 60% by mass or less with respect to 100% by mass of the total amount of the radically polymerizable adhesive, one or more of the properties of the radically polymerizable adhesive, such as applicability, normal-state adhesiveness (normal-state tensile lap-shear adhesive strength), hot adhesiveness (hot tensile adhesive strength), hot tensile lap-shear adhesive strength retention rate R^{a}, heat aging resistance (heat aging resistance-tensile adhesive strength), heat aging resistance-tensile lap-shear adhesive strength retention rate R^{b}, and the like, can be further enhanced.

### [(E) Curing Catalyst]

The radically polymerizable adhesive of the present invention preferably further contains a curing catalyst (E).

The curing catalyst (E) is not particularly limited. Examples thereof include one or more types selected from the group consisting of imide-based compounds, amine-based compounds, azole-based compounds, mercaptan-based compounds, hydrazine-based compounds, and the like. These curing catalysts are curing catalysts that are also useful as anaerobic curing catalysts. Among these, imide-based compounds are preferred from the viewpoint of improving curability, particularly improving anaerobic curability.

The imide-based compound is one or more types of compounds having a group represented by the following formula (4) or (5), or salts thereof:

-CONHCO- ··· (4)

-CONHSO₂- ··· (5).

Examples of the imide-based compound include one or more types selected from the group consisting of o-benzoic sulfimide (saccharin), succinimide, phthalimide, salts thereof (particularly salts of alkali metals such as sodium and potassium), and the like.

Examples of the amine-based compound include one or more types selected from the group consisting of heterocyclic secondary amines such as 1,2,3,4-tetrahydroquinoline and 1,2,3,4-tetrahydroquinaldine; heterocyclic tertiary amines such as quinoline, methylquinoline, quinaldine, and quinoxaline phenazine; aromatic tertiary amines such as N,N-dimethylanisidine and N,N-dimethylaniline; and the like.

Examples of the azole-based compound include one or more types selected from the group consisting of 1,2,4-triazole, oxazole, oxadiazole, thiadiazole, benzotriazole, hydroxybenzotriazole, benzoxazole, 1,2,3-benzothiadiazole, 3-mercaptobenzotrizole, and the like.

Examples of the mercaptan-based compound include one or more types selected from the group consisting of linear mercaptans such as n-dodecyl mercaptan, ethyl mercaptan, and butyl mercaptan; and the like.

Examples of the hydrazine-based compound include one or more types selected from the group consisting of 1-acetyl-2-phenylhydrazine, 1-acetyl-2(p-tolyl)hydrazine, 1-benzoyl-2-phenylhydrazine, 1-(1',1',1'-trifluoro)acetyl-2-phenylhydrazine, 1,5-diphenyl-carbohydrazine, 1-formyl-2-phenylhydrazine, 1-acetyl-2-(p-bromophenyl)hydrazine, 1-acetyl-2-(p-nitrophenyl)hydrazine, 1-acetyl-2-(p-methoxyphenyl)hydrazine, 1-acetyl-2-(2'-phenylethylhydrazine), p-nitrophenylhydrazine, p-trisulfonyl hydrazide, 1-acetyl-2-methylhydrazine, 1-phenylsemicarbazide, 2-phenyl-t-butyl carbazate, succinic acid di(phenylhydrazide), and the like.

The content of the curing catalyst (E) in the radically polymerizable adhesive is not particularly limited, as long as the content does not impair properties such as handleability, adhesive strength, curing rate, and storage stability of the radically polymerizable adhesive. The content is 0 parts by mass or more with respect to 100 parts by mass of the radically polymerizable compound (A), and can be, for example, 0.1 parts by mass or more, preferably 0.5 parts by mass or more, and can be in a range of, for example, 5 parts by mass or less, preferably 3 parts by mass or less. When the content of the curing catalyst (E) in the radically polymerizable adhesive is set to a range of 5 parts by mass or less with respect to 100 parts by mass of the radically polymerizable compound (A), curability and storage stability, particularly anaerobic curability and storage stability, of the radically polymerizable adhesive can be improved.

### [(F) Storage Stabilizer]

The radically polymerizable adhesive of the present invention may further contain a storage stabilizer (F). Examples of the storage stabilizer include one or more types selected from the group consisting of polymerization inhibitors (radical scavengers and metal chelating agents), antioxidants, and the like.

Examples of the polymerization inhibitor include one or more types selected from the group consisting of: one or more types of metal chelating agents selected from the group consisting of ethylenediaminetetraacetic acid, disodium salts thereof, tetrasodium salts thereof, oxalic acid, acetylacetone, o-aminophenol, and the like; one or more types of quinone-based compounds selected from the group consisting of hydroquinone, benzoquinone, hydroquinone monomethyl ether, β-naphthoquinone, 2-methoxy-1,4-naphthoquinone, methylhydroquinone, hydroquinone monomethyl ether, mono-tert-butylhydroquinone, 2,5-di-tert-butylhydroquinone, p-benzoquinone, 2,5-diphenyl-p-benzoquinone, 2,5-di-tert-butyl-p-benzoquinone, and the like; one or more types of hindered phenol-based compounds selected from the group consisting of pentaerythritol tetrakis(3-(3,5-ditertiarybutyl-4-hydroxyphenyl)propionate), 2,6-di-t-butyl-4-methylpheel, 2,2-methylenebis(4-methyl-6-t-butylphenol), and the like; hindered amine-based compounds; one or more types of nitrosoamine-based compounds selected from the group consisting of N-methyl-N-nitrosoaniline, N-nitrosodiphenylamine, N-nitrosophenylhydroxylamine aluminum salt, and the like; phosphorus-based compounds such as triphenyl phosphite; phenothiazine, N-isopropyl-N'-phenyl-p-phenylenediamine, diethylhydroxylamine, sulfur, t-butylcatechol, potassium triiodide; and the like.

The content of the storage stabilizer (F) in the radically polymerizable adhesive is not particularly limited. The content is 0 parts by mass or more with respect to 100 parts by mass of the radically polymerizable compound (A), and can be, for example, 0.001 parts by mass or more, preferably 0.002 parts by mass or more, and can be, for example, 7 parts by mass or less, preferably 5 parts by mass or less.

### [(G) Other Components]

The radically polymerizable adhesive of the present invention may contain other components (G), in addition to the radically polymerizable compound (A), the organic peroxide (B), the phosphate ester compound (C) having a radically polymerizable group, the non-radically polymerizable polymer (D) having a molecular weight of 1,000 or more, the curing catalyst (E), and the storage stabilizer (F), as long as the other components (G) do not impair the functions of the adhesive, such as curability and adhesiveness of a cured product.

Examples of the other components (G) include one or more types selected from the group consisting of inorganic fillers, silane coupling agents, curing rate modifiers, plasticizers, defoaming agents, heavy metal deactivators, adhesion and/or tackifying agents (tackifiers), antioxidants, light stabilizers, reinforcing agents, colorants, flame retardants, rust inhibitors, dispersants, thixotropic agents, anti-settling agents, anti-aging agents, light stabilizers, ultraviolet absorbers, fragrances, and the like.

Among the other components (G), examples of the inorganic filler include one or more types selected from the group consisting of glass, silica, alumina, mica, ceramics, calcium carbonate, aluminum nitride, carbon powder, kaolin clay, dried clay minerals, dried diatomaceous earth, and the like.

Among the other components (G), the silane coupling agent is used as an adhesion-imparting agent. Examples of the silane coupling agent include one or more types selected from the group consisting of γ-chloropropyltrimethoxysilane, octenyltrimethoxysilane, glycidoxyoctyltrimethoxysilane, β-(3,4-epoxycyclohexyl)ethyltrimethoxysilane, γ-glycidoxypropyltrimethoxysilane, γ-glycidoxypropyltriethoxysilane, γ-glycidoxypropylmethyldiethoxysilane, γ-aminopropyltrimethoxysilane, N-2-(aminoethyl)-3-aminopropylmethyldimethoxysilane, 3-triethoxysilyl-N-(1,3-dimethylbutylidene)propylamine, N-phenyl-γ-aminopropyltrimethoxysilane, γ-(meth)acryloxypropyltrimethoxysilane, γ-(meth)acryloxypropyltriethoxysilane, γ-isocyanatopropyltriethoxysilane, γ-ureidopropyltriethoxysilane, p-styryltrimethoxysilane, and the like.

### [Hot Tensile Lap-Shear Adhesive Strength Retention Rate R^{a} and Heat Aging Resistance-Tensile Lap-Shear Adhesive Strength Retention Rate R^{b}]

The radically polymerizable adhesive of the present invention has a hot tensile lap-shear adhesive strength retention rate R^{a} of 13% or more and a heat aging resistance-tensile lap-shear adhesive strength retention rate R^{b} of 50% or more.

That is, the radically polymerizable adhesive of the present invention satisfies both the requirement of a hot tensile lap-shear adhesive strength retention rate R^{a} of 13% or more and the requirement of a heat aging resistance-tensile lap-shear adhesive strength retention rate R^{b} of 50% or more.

### <Hot Tensile Lap-Shear Adhesive Strength Retention Rate R^{a}>

The hot tensile lap-shear adhesive strength retention rate R^{a} of the radically polymerizable adhesive of the present invention is 13% or more, preferably 14% or more, and more preferably 15% or more.

The hot tensile lap-shear adhesive strength retention rate R^{a} (%) is calculated by equation (i):
[Math. 5] ${R}^{a} \left(%\right) = \frac{B \left(N/{mm}^{2}\right)}{A \left(N/{mm}^{2}\right)} \times 100$ (i) In equation (i), A is a tensile lap-shear adhesive strength (N/mm²) when bonding is performed at 23°C, and B is a hot tensile lap-shear adhesive strength (N/mm²) at 150°C.

When the hot tensile lap-shear adhesive strength retention rate R^{a} of the radically polymerizable adhesive is 13% or more, preferably 14% or more, and more preferably 15% or more, even when coating is performed after bonding and heat drying is performed, peeling of a bonded portion during heating (hot) at the time of heat drying can be inhibited, which is advantageous in terms of reduction of a product defect rate, improvement of productivity, and the like.

The tensile lap-shear strength (normal-state tensile lap-shear adhesive strength) when bonding is performed at 23°C, which is used for calculating the hot tensile lap-shear adhesive strength retention rate R^{a}, can be determined by the method described in <Normal-State Tensile Lap-Shear Adhesive Strength> of Examples.

The hot tensile lap-shear adhesive strength at 150°C (hot tensile lap-shear adhesive strength), which is used for calculating the hot tensile lap-shear adhesive strength retention rate R^{a}, can be determined by the method described in <Hot Tensile Lap-Shear Adhesive Strength> of Examples.

### <Heat Aging Resistance-Tensile Lap-Shear Adhesive Strength Retention Rate R^{b}>

The heat aging resistance-tensile lap-shear adhesive strength retention rate R^{b} of the radically polymerizable adhesive of the present invention is 50% or more, preferably 70% or more, and more preferably 80% or more.

The heat aging resistance-tensile lap-shear adhesive strength retention rate R^{a} is calculated by equation (ii):
[Math. 6] ${R}^{b} \left(%\right) = \frac{C \left(N/{mm}^{2}\right)}{A \left(N/{mm}^{2}\right)} \times 100$ (ii) In equation (ii), A is a tensile lap-shear adhesive strength (N/mm²) when bonding is performed at 23°C, and C is a tensile lap-shear adhesive strength (N/mm²) after heating at 200°C for 2 hours and then cooling to 23°C.

When the heat aging resistance-tensile lap-shear adhesive strength retention rate R^{b} of the radically polymerizable adhesive is 50% or more, even when coating is performed after bonding and heat drying is performed, peeling of a bonded portion upon cooling after heating can be inhibited, which is advantageous in terms of reduction of a product defect rate, improvement of productivity, and the like.

The tensile lap-shear strength (normal-state tensile lap-shear adhesive strength) when bonding is performed at 23°C, which is used for calculating the heat aging resistance-tensile lap-shear adhesive strength retention rate R^{b}, can be determined by the method described in

### <Normal-State Tensile Lap-Shear Adhesive Strength> of Examples.

The tensile lap-shear adhesive strength after heating at 200°C for 2 hours and then cooling to 23°C (heat aging resistance-tensile lap-shear adhesive strength), which is used for calculating the heat aging resistance-tensile lap-shear adhesive strength retention rate R^{b}, can be determined by the method described in <Heat Aging Resistance-Tensile Lap-Shear Adhesive Strength> of Examples.

### [Other Properties of Radically Polymerizable Adhesive]

### <Tensile Lap-Shear Adhesive Strength When Bonding Is Performed at 23°C>

The radically polymerizable adhesive of the present invention preferably has, when bonding is performed at 23°C, a tensile lap-shear adhesive strength (normal-state tensile lap-shear adhesive strength) of 2.50 N/mm² or more. The tensile lap-shear adhesive strength is preferably 2.75 N/mm² or more, more preferably 3.00 N/mm² or more, and still more preferably 3.25 N/mm² or more. The upper limit of the tensile lap-shear adhesive strength when bonding is performed at 23°C (normal-state tensile lap-shear adhesive strength) is not particularly limited, but is, for example, 9.00 N/mm² or less.

The tensile lap-shear adhesive strength (normal-state tensile lap-shear adhesive strength) when bonding is performed at 23°C can be determined by the method described in <Normal-State Tensile Lap-Shear Adhesive Strength> of Examples.

### <Tensile Lap-Shear Adhesive Strength After Heating at 200°C for 2 Hours and then Cooling to 23°C>

The radically polymerizable adhesive of the present invention preferably has a tensile lap-shear adhesive strength after heating at 200°C for 2 hours and then cooling to 23°C (heat aging resistance-tensile lap-shear adhesive strength) of 2.50 N/mm² or more. The tensile lap-shear adhesive strength is preferably 2.75 N/mm² or more, more preferably 3.00 N/mm² or more, and still more preferably 3.25 N/mm² or more. The upper limit of the tensile lap-shear adhesive strength after heating at 200°C for 2 hours and then cooling to 23°C (heat aging resistance-tensile lap-shear adhesive strength) is not particularly limited, but is, for example, 9.00 N/mm² or less.

When the tensile lap-shear adhesive strength after heating at 200°C for 2 hours and then cooling to 23°C (heat aging resistance-tensile lap-shear adhesive strength) of the radically polymerizable adhesive is 2.50 N/mm² or more, even when coating is performed after bonding and heat drying is performed, peeling of a bonded portion upon cooling after heating can be inhibited, which is advantageous in terms of reduction of a product defect rate, improvement of productivity, and the like.

The tensile lap-shear adhesive strength after heating at 200°C for 2 hours and then cooling to 23°C (heat aging resistance-tensile lap-shear adhesive strength) can be determined by the method described in <Heat Aging Resistance-Tensile Lap-Shear Adhesive Strength> of Examples.

### <Viscosity>

The viscosity of the radically polymerizable adhesive of the present invention is not particularly limited. From the viewpoints of handleability, prevention of protrusion at the time of bonding, and the like, the viscosity can be, for example, 0.01 Pa·s or more, preferably 0.05 Pa·s or more, and more preferably 0.5 Pa·s or more, and can be, for example, 50 Pa·s or less, preferably 30 Pa·s or less, and more preferably 15 Pa·s or less.

Adjustment of the viscosity can be performed using a viscosity adjustment method known in the adhesive field, such as, for example, blending a viscosity modifier (thixotropic agent).

The viscosity can be determined, for example, by collecting 100 g of the radically polymerizable adhesive in a bottle, discharging the radically polymerizable adhesive into a measurement cup, and measuring the radically polymerizable adhesive under conditions of 25°C and a rotational speed of 60 rpm using a Brookfield-type viscometer (manufactured by Toki Sangyo Co., Ltd.).

### [Method for Producing Radically Polymerizable Adhesive]

A method for producing the radically polymerizable adhesive of the present invention is not particularly limited. For example, the radically polymerizable adhesive can be produced by taking at least the radically polymerizable compound (A), the organic peroxide (B), and the phosphate ester compound (C) having a radically polymerizable group, each in a predetermined amount, adding them to a mixing container in any order, and mixing them.

At the time of mixing, a mixing device such as a mixer (a rotation/revolution mixer, a planetary mixer, and the like), a tumbler, a stirrer, an agitator, a mechanical homogenizer, an ultrasonic homogenizer, a high-pressure homogenizer, a shaker, a V-type blender, a Nauta mixer, and the like can be used, and a mixer is preferably used.

The mixing conditions are not particularly limited. As the temperature conditions, for example, a temperature of 0°C or higher, preferably 10°C or higher, and, for example, 100°C or lower, preferably 70°C or lower can be used. As the mixing time, for example, 1 minute or more, preferably 5 minutes or more, and, for example, 10 hours or less, preferably 5 hours or less can be used.

### [Use of Radically Polymerizable Adhesive]

The radically polymerizable adhesive of the present invention can be used as an anaerobic adhesive. In the present invention, the radically polymerizable adhesive is preferably an anaerobic adhesive, particularly an anaerobic adhesive for metal.

The radically polymerizable adhesive of the present invention can be used in various fields, including various electric/electronic components, automobiles, machines, buildings, and civil engineering.

The radically polymerizable adhesive of the present invention can be used for bonding various adherends, and can be rapidly cured and bonded at 25°C (room temperature). Examples of the adherend include one or more types of various metals such as iron, aluminum, magnesium, stainless steel, titanium, and copper; resins; glass; ceramics; paper; cloth; fibers; and the like. The radically polymerizable adhesive of the present invention has excellent adhesiveness to metal and is preferably used for metal, and particularly, because of its curability, may be used for a formed article obtained by bonding two or more metal sheets, that is, a plurality of metal sheets. Examples of the metal sheet include one or more types selected from steel sheets (various iron steel sheets such as cold-rolled steel sheets (SPCC, SPCC-SD) and coated steel sheets), aluminum sheets, stainless steel sheets, magnesium sheets, and copper sheets. The thickness of the metal sheet is not particularly limited and can be appropriately determined according to the use and the like. The thickness is, for example, 0.01 mm or more, preferably 0.1 mm or more, and is, for example, 5 mm or less, preferably 3 mm or less, and more preferably 1 mm or less.

When the radically polymerizable adhesive of the present invention is used for bonding metal, for example, for anaerobic bonding of metal, it is preferable to apply a primer to the metal in advance. When the radically polymerizable adhesive of the present invention is used for bonding metal, the primer applied to the metal is preferably one containing a transition metal compound, particularly a copper compound, as an adhesion promoter for a radically polymerizable adhesive. The primer may contain, in addition to the transition metal compound, a liquid medium, a rust inhibitor, an antiseptic, and the like.

Examples of the copper compound include one or more types selected from the group consisting of copper salts of carboxylic acids, such as copper neodecanoate, copper 2-ethylhexanoate, copper naphthenate, copper octenoate, copper hexanoate, copper propionate, and copper 2,4-pentanedionate (copper acetylacetonate); copper complexes such as copper ethylenediamine and copper propylenediamine; and the like.

Examples of the liquid medium include one or more types of organic solvents and/or water. The organic solvent is not particularly limited. Examples thereof include one or more types selected from the group consisting of aliphatic hydrocarbon-based organic solvents having 5 to 40 carbon atoms (hexane, heptone, paraffin, and the like); alicyclic hydrocarbon-based solvents having 5 to 20 carbon atoms; aromatic hydrocarbon-based solvents having 6 to 20 carbon atoms (benzene, toluene, xylene, ethylbenzene, indene, and the like); alcohol-based solvents having 1 to 10 carbon atoms (methanol, ethanol, propanol, isopropanol, hexanol, and the like); ketone-based solvents having 3 to 20 carbon atoms (acetone, methyl ethyl ketone, methyl isobutyl ketone, cyclohexanone, and the like); ether-based solvents having 2 to 20 carbon atoms (tetrahydrofuran, diethyl ether, dioxane, ethyl cellosolve, propylene glycol monomethyl ether, and the like); ester-based solvents having 2 to 20 carbon atoms (methyl acetate, ethyl acetate, butyl acetate, and the like); oils (blanking oil (punching oil), mineral oil, synthetic oil, animal and vegetable oils, and the like); and the like. In particular, use of oils provides a rust-preventive effect for metal and also facilitates machining such as punching after bonding.

The composition of the primer is not particularly limited. When the total amount of the primer is taken as 100% by mass, the copper compound is, for example, 0.01% by mass or more, preferably 0.1% by mass or more, and more preferably 0.2% by mass or more, and is, for example, 15.0% by mass or less, preferably 10.0% by mass or less, and more preferably 8.0% by mass or less. In addition, when the total amount of the primer is taken as 100% by mass, oils among the liquid media are, for example, 20.0% by mass or more, preferably 25.0% by mass or more, and more preferably 30.0% by mass or more, and are, for example, 80.0% by mass or less, preferably 70.0% by mass or less, and more preferably 60.0% by mass or less.

### EXAMPLES

The present invention will be specifically described by the following Examples, but the present invention is not limited by the following Examples. In each Example, unless otherwise specified, "parts" represents "parts by mass", and "%" represents "% by mass". In addition, descriptions relating to blending amount ratios in the tables are all "parts" (parts by mass).

### [Constituent Components of Radically Polymerizable Adhesive]

In Examples and Comparative Examples presented in Table 1 and Table 2, the constituent components of the radically polymerizable adhesive are as follows.
HEMA: hydroxyethyl methacrylate
BPEPMA: a difunctional bisphenol A-type epoxy methacrylate represented by the following formula (B): 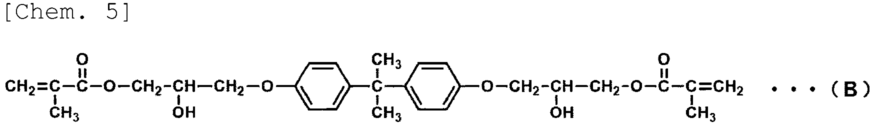
BPEDM: bisphenol A ethylene oxide 10 mol adduct dimethacrylate represented by the following formula (C): 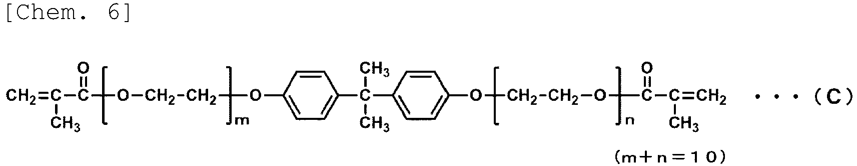
PUA: polytetramethylene glycol-based urethane acrylate (weight-average molecular weight: 28,000, acrylates at both terminals)
AcPolym: acrylic polymer (Tg: 47°C, weight-average molecular weight: 55,000)
PHNXR: phenoxy resin (weight-average molecular weight: 52,000)
BPU: blocked polyether urethane resin (blocked NCO
equivalent: 1,400; viscosity: 25,000 mPa·s (50°C); solid
content: 100%)
MAEP: 2-methacryloyloxyethyl acid phosphate
EDTANa: tetrasodium ethylenediaminetetraacetate
SACC: saccharin
CHP: cumene hydroperoxide

### [Evaluation of Adhesive Properties]

### <Preparation of Steel Sheet for Testing>

A cold-rolled steel sheet (SPCC-SD) having a thickness of 0.5 mm in accordance with JIS G 3141 was cut into a size of 25 mm in width × 100 mm in length (W 25 mm × L 100 mm), thereby preparing a cold-rolled steel sheet for testing.

### <Preparation of Primer>

0.6 parts of a 60% toluene solution of copper neodecanoate, 49.4 parts of ethanol, and 50 parts of drying blanking oil were collected and mixed in a glass container, thereby preparing a primer.

### <Normal-State Tensile Lap-Shear Adhesive Strength>

The normal-state tensile lap-shear adhesive strength is a tensile lap-shear adhesive strength when bonding is performed at 23°C, and can be determined as follows.

Two prepared cold-rolled steel sheets for testing were provided. A primer was applied by spraying onto one sheet, and the sheet was left to stand at 25°C for 3 hours and dried. Onto the other sheet, 0.03 ml of the radically polymerizable adhesive was applied with a spatula, and immediately after application of the radically polymerizable adhesive, the primer-applied surface and the radically polymerizable adhesive-applied surface were bonded together such that the bonding area was 25 mm in width × 12.5 mm in length. Thereafter, the two test pieces were pressed together for 200 seconds and then taken out, thereby preparing a test specimen.

The prepared test specimen was cured in an environment at 23°C for 24 hours, and was pulled at 23°C at a tensile speed of 0.5 mm/min using a universal tensile tester, thereby determining the normal-state tensile lap-shear adhesive strength (N/mm²) based on JIS K 6850 (1999).

### <Hot Tensile Lap-Shear Adhesive Strength>

The hot tensile lap-shear adhesive strength is a hot tensile lap-shear adhesive strength at 150°C, and can be determined as follows.

Two prepared cold-rolled steel sheets for testing were provided. A primer was applied by spraying onto one sheet, and the sheet was left to stand at 25°C for 3 hours and dried. Onto the other sheet, 0.03 ml of the radically polymerizable adhesive was applied with a spatula, and immediately after application of the radically polymerizable adhesive, the primer-applied surface and the radically polymerizable adhesive-applied surface were bonded together such that the bonding area was 25 mm in width × 12.5 mm in length. Thereafter, the two test pieces were pressed together for 200 seconds and anaerobically bonded, and then taken out, thereby preparing a test specimen.

After the prepared test specimen was cured in an environment at 23°C for 24 hours, the test specimen was pulled in a hot state at 150°C at a tensile speed of 0.5 mm/min using a universal tensile tester, thereby determining the hot tensile lap-shear adhesive strength (N/mm²) based on JIS K 6850 (1999).

### <Heat Aging Resistance-Tensile Lap-Shear Adhesive Strength>

The heat aging resistance-tensile lap-shear adhesive strength is a tensile lap-shear adhesive strength after heating at 200°C for 2 hours and then cooling to 23°C, and can be determined as follows.

Two prepared cold-rolled steel sheets for testing were provided. A primer was applied by spraying onto one sheet, and the sheet was left to stand at 25°C for 3 hours and dried. Onto the other sheet, 0.03 ml of the radically polymerizable adhesive was applied with a spatula, and immediately after application of the radically polymerizable adhesive, the primer-applied surface and the radically polymerizable adhesive-applied surface were bonded together such that the bonding area was 25 mm in width × 12.5 mm in length. Thereafter, the two test pieces were pressed together for 200 seconds and anaerobically bonded, and then taken out, thereby preparing a test specimen.

The prepared test specimen was cured in an environment at 23°C for 24 hours, then heated at 200°C for 2 hours, left to stand after heating until it was cooled to 23°C, and then pulled at a tensile speed of 0.5 mm/min using a universal tensile tester, thereby determining the heat aging resistance-tensile lap-shear adhesive strength (tensile lap-shear adhesive strength after heating at 200°C for 2 hours and then cooling to 23°C) (N/mm²) based on JIS K 6850 (1999).

### <Hot Tensile Lap-Shear Strength Retention Rate R^{a}>

The hot tensile lap-shear strength retention rate R^{a} was calculated by equation (i):
[Math. 7] ${R}^{a} \left(%\right) = \frac{B \left(N/{mm}^{2}\right)}{A \left(N/{mm}^{2}\right)} \times 100$ (i) In equation (i), A is a tensile lap-shear adhesive strength when bonding is performed at 23°C (normal-state tensile lap-shear adhesive strength) (N/mm²), and B is a hot tensile lap-shear adhesive strength at 150°C (hot tensile lap-shear adhesive strength) (N/mm²).

### <Heat Aging Resistance-Tensile Lap-Shear Strength Retention Rate R^{b}>

The heat aging resistance-tensile lap-shear strength retention rate R^{b} was calculated by equation (ii):
[Math. 8] ${R}^{b} \left(%\right) = \frac{C \left(N/{mm}^{2}\right)}{A \left(N/{mm}^{2}\right)} \times 100$ (ii) In equation (ii), A is a tensile lap-shear adhesive strength when bonding is performed at 23°C (normal-state tensile lap-shear adhesive strength) (N/mm²), and C is a tensile lap-shear adhesive strength after heating at 200°C for 2 hours and then cooling to 23°C (heat aging resistance-tensile lap-shear adhesive strength) (N/mm²).

### [Examples A1 to A6 and Comparative Example A1]

### <Preparation of Radically Polymerizable Adhesive>

The components listed in Table 1 were collected in the respective amounts (parts by mass) indicated in Table 1 and mixed in a glass container, thereby preparing radically polymerizable adhesives.

The obtained radically polymerizable adhesives were used to measure the normal-state tensile lap-shear adhesive strength (tensile lap-shear adhesive strength when bonding is performed at 23°C) and the hot tensile lap-shear adhesive strength (hot tensile lap-shear adhesive strength at 150°C), and the hot tensile lap-shear strength retention rate R^{a} was calculated using these data.

The normal-state tensile lap-shear adhesive strength (tensile lap-shear adhesive strength when bonding is performed at 23°C) and the hot tensile lap-shear strength retention rate R^{a} are also indicated in Table 1.

**[Table 1]**

| | Example A1 | Example A2 | Example A3 | Example A4 | Example A5 | Example A6 | Comparative Example A1 |
|---|---|---|---|---|---|---|---|
| HEMA | 35.70 | 35.70 | 35.70 | 35.70 | 35.70 | 35.70 | 42.00 |
| BPEPMA | | | 49.30 | 49.30 | | 34.30 | |
| BPEDM | 49.30 | 49.30 | | | 34.30 | | 58.00 |
| PUA | | | | | 15.00 | 15.00 | |
| AcPolym | 15.00 | | 15.00 | | 15.00 | 15.00 | |
| PHNXR | | 15.00 | | | | | |
| BPU | | | | 15.00 | | | |
| MAEP | 0.10 | 0.10 | 0.10 | 0.10 | 0.10 | 0.10 | 0.10 |
| EDTANa | 0.02 | 0.02 | 0.02 | 0.02 | 0.02 | 0.02 | 0.02 |
| SACC | 1.50 | 1.50 | 1.50 | 1.50 | 1.50 | 1.50 | 1.50 |
| CHP | 1.00 | 1.00 | 1.00 | 1.00 | 1.00 | 1.00 | 1.00 |
| Total | 102.62 | 102.62 | 102.62 | 102.62 | 102.62 | 102.62 | 102.62 |
| Normal-state tensile lap-shear adhesive strength (N/mm²) | 5.85 | 6.85 | 6.96 | 9.73 | 5.44 | 6.55 | 7.88 |
| Hot tensile lap-shear adhesive strength retention rate R^{a} (%) | 22% | 16% | 28% | 37% | 19% | 22% | 12% |

It can be seen from Table 1 that, when metal sheets (steel sheets) are bonded together using the radically polymerizable adhesives of Examples A1 to A6 according to the present invention, excellent normal-state tensile lap-shear adhesive strength is exhibited at normal temperature (23°C), and since the hot tensile lap-shear adhesive strength retention rate R^{a} is 13% or more, particularly 15% or more, excellent hot tensile lap-shear adhesive strength is exhibited even during heating (hot) when heating (for example, heating to 150°C) is performed after bonding.

### [Examples B1 to B6 and Comparative Example B1]

### <Preparation of Radically Polymerizable Adhesive>

The components listed in Table 2 were collected in the respective amounts (parts by mass) indicated in Table 2 and mixed in a glass container, thereby preparing radically polymerizable adhesives.

The resulting radically polymerizable adhesives were used to measure the normal-state tensile lap-shear adhesive strength (tensile lap-shear adhesive strength when bonding is performed at 23°C) and the heat aging resistance-tensile lap-shear adhesive strength (tensile lap-shear adhesive strength after heating at 200°C for 2 hours and then cooling to 23°C), and the heat aging resistance-tensile lap-shear adhesive strength retention rate R^{b} was calculated using these data.

The normal-state tensile lap-shear adhesive strength (tensile lap-shear adhesive strength when bonding is performed at 23°C) and the heat aging resistance-tensile lap-shear adhesive strength retention rate R^{b} are also indicated in Table 2.

**[Table 2]**

| | Example B1 | Example B2 | Example B3 | Example B4 | Example B5 | Example B6 | Comparative Example B1 |
|---|---|---|---|---|---|---|---|
| HEMA | 35.70 | 35.70 | 35.70 | 35.70 | 35.70 | 35.70 | 42.00 |
| BPEPMA | | | 49.30 | 49.30 | | 34.30 | 58.00 |
| BPEDM | 49.30 | 49.30 | | | 34.30 | | |
| PUA | | | | | 15.00 | 15.00 | |
| AcPolym | 15.00 | | 15.00 | | 15.00 | 15.00 | |
| PHNXR | | 15.00 | | | | | |
| BPU | | | | 15.00 | | | |
| MAEP | 0.10 | 0.10 | 0.10 | 0.10 | 0.10 | 0.10 | 0.10 |
| EDTANa | 0.02 | 0.02 | 0.02 | 0.02 | 0.02 | 0.02 | 0.02 |
| SACC | 1.50 | 1.50 | 1.50 | 1.50 | 1.50 | 1.50 | 1.50 |
| CHP | 1.00 | 1.00 | 1.00 | 1.00 | 1.00 | 1.00 | 1.00 |
| Total | 102.62 | 102.62 | 102.62 | 102.62 | 102.62 | 102.62 | 102.62 |
| Normal-state tensile lap-shear adhesive strength (N/mm²) | 5.85 | 6.85 | 6.96 | 9.73 | 5.44 | 6.55 | 8.35 |
| Heat aging resistance-tensile lap-shear adhesive strength retention rate R^{b} (%) | 119% | 127% | 100% | 87% | 125% | 100% | 31% |

It can be seen from Table 2 that, when metal sheets (steel sheets) are bonded together using the radically polymerizable adhesives of Examples B1 to B6 according to the present invention, excellent normal-state tensile lap-shear adhesive strength is exhibited at normal temperature (23°C), and since the heat aging resistance-tensile lap-shear adhesive strength retention rate R^{b} is 50% or more, particularly 80% or more, excellent heat aging resistance-tensile lap-shear adhesive strength is exhibited even after heat treatment (for example, heating at 200°C for 2 hours) is performed after bonding.

## Claims

1. A radically polymerizable adhesive comprising:
(A) a radically polymerizable compound; (B) an organic peroxide; (C) a phosphate ester compound having a radically polymerizable group; and (D) a non-radically polymerizable polymer having a molecular weight of 1,000 or more,
wherein the radically polymerizable adhesive has a hot tensile lap-shear adhesive strength retention rate R^{a} of 13% or more and a heat aging resistance-tensile lap-shear adhesive strength retention rate R^{b} of 50% or more,
wherein the hot tensile lap-shear adhesive strength retention rate R^{a} is calculated by equation (i):
[Math. 1] ${R}^{a} \left(%\right) = \frac{B \left(N/{mm}^{2}\right)}{A \left(N/{mm}^{2}\right)} \times 100$ (i) wherein, in equation (i), A is a tensile lap-shear adhesive strength (N/mm²) when bonding is performed at 23°C, and B is a hot tensile lap-shear adhesive strength (N/mm²) at 150°C,
wherein the heat aging resistance-tensile lap-shear adhesive strength retention rate R^{b} is calculated by equation (ii):
[Math. 2] ${R}^{b} \left(%\right) = \frac{C \left(N/{mm}^{2}\right)}{A \left(N/{mm}^{2}\right)} \times 100$ (ii) wherein, in equation (ii), A is a tensile lap-shear adhesive strength (N/mm²) when bonding is performed at 23°C, and C is a tensile lap-shear adhesive strength (N/mm²) after heating at 200°C for 2 hours and then cooling to 23°C.

2. The radically polymerizable adhesive according to claim 1, wherein the radically polymerizable compound (A) contains:
(a1) a radically polymerizable compound having, in a molecule, a structure represented by formula (1): 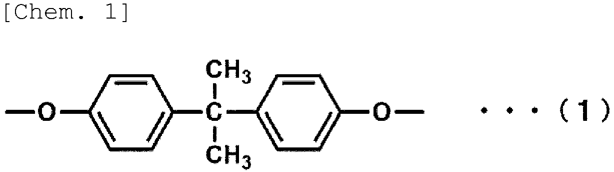 and/or
(a2) a urethane (meth)acrylate.

3. The radically polymerizable adhesive according to claim 1 or 2, wherein the radically polymerizable adhesive is an anaerobic adhesive.

4. The radically polymerizable adhesive according to claim 3, wherein the radically polymerizable adhesive is an anaerobic adhesive for metal.
